# EUROPÄISCHE PATENTSCHRIFT

(11) **EP 1 169 249 B1**
(45) Veröffentlichungstag und Bekanntmachung des Hinweises auf die Patenterteilung: **29.09.2004**
(21) Anmeldenummer: 00912326.6
(22) Anmeldetag: 06.04.2000
(51) Int. Cl.: B65G 47/84, B65G 17/32, B65G 17/36

(54) **VERFAHREN UND VORRICHTUNG ZUR STÜCKGUTFÖRDERUNG**
METHOD AND DEVICE FOR CONVEYING UNIT LOADS
PROCEDE ET DISPOSITIF POUR TRANSPORTER DES PRODUITS EN VRAC

(30) Priorität: 14.04.1999 CH 69099
(43) Veröffentlichungstag der Anmeldung: 09.01.2002
(73) Patentinhaber: IPT Weinfelden AG, 8570 Weinfelden (CH)
(72) Erfinder: WALTHER, René, CH-8597 Landschlacht (CH); BÜCHI, Robert, CH-8570 Weinfelden (CH)
(74) Vertreter: Frei, Alexandra Sarah
(86) Internationale Anmeldenummer: PCT/CH2000/000201
(87) Internationale Veröffentlichungsnummer: WO 2000/061470

(56) Entgegenhaltungen:
- DE-B- 1 145 095
- GB-A- 2 074 528
- US-A- 3 231 061
- US-A- 3 613 571
- US-A- 4 056 185

## Beschreibung

Die Erfindung liegt auf dem Gebiete der Fördertechnik und betrifft ein Verfahren und eine Vorrichtung gemäss den Oberbegriffen der entsprechenden, unabhängigen Patentansprüche. Verfahren und Vorrichtung dienen der Förderung von Stückgut, wobei unter Stückgut eine grosse Zahl von Gegenständen zu verstehen ist, welche Gegenstände einzeln oder in kleinen Gruppen gehalten gefördert und gegebenenfalls bearbeitet werden und welche Gegenstände einander mindestens derart ähnlich sind, dass sie mit gleichen Halte/Fördermitteln gehalten und gefördert werden können. Das erfindungsgemässe Verfahren und die erfindungsgemässe Vorrichtung dienen insbesondere der Beladung der Halte/Fördermittel mit Gegenständen und/oder der Entladung von Halte/Fördermittein.
Halte/Fördermittel sind z.B. aus US-A-4056185 bekannt.

Halte/Fördermittel für die gehaltene Förderung von einzelnen Gegenständen sind beispielsweise auf die Gegenstände abgestimmte Greifer, die in regelmässigen Abständen an einer Förderkette angeordnet sind und die je einen Gegenstand an einer Ladestelle ergreifen, über eine Förderstrecke fördern und an einer Entladestelle wieder loslassen. Während der Förderung oder während eines Unterbruchs der Förderung können derart gehalten geförderte Gegenstände auch bearbeitet werden, wobei sie üblicherweise durch den Greifer in der korrekten Bearbeitungsposition gehalten werden und die Bearbeitung üblicherweise in einer regelmässig getakteten Weise durchgeführt wird.

Halte/Fördermittel für die gehaltene Förderung von Stückgut können auch voneinander unabhängig sein und individuell auf einem entsprechenden Schienensystem verfahrbar. In derartigen Systemen zur Stückgut-Förderung können Bearbeitungen in regelmässig getakteter Weise durchgeführt werden, wobei die Halte/Fördermittel in die Bearbeitungsstation eingetaktet werden. Es ist aber auch möglich, die Halte/Fördermittel mit individuellen Abständen in die Bearbeitungsstation zu führen und diese für eine Bearbeitung nur dann zu aktivieren, wenn ein Halte/Fördermittel, das einen zu bearbeitenden Gegenstand trägt, detektiert wird.

Die Erfindung stellt sich nun die Aufgabe, ein Verfahren und eine Vorrichtung zu schaffen, mit denen während einer im wesentlichen kontinuierlichen oder gegebenenfalls auch taktweisen Förderung voneinander unabhängige oder miteinander in regelmässigen oder variierbaren Abständen verbundene Halte/Fördermittel mit Gegenständen beladen und/oder Gegenstände von derartigen Halte/Fördermitteln entladen werden. Laden und/oder Entladen sollen keine ungeführten Gegenstandsbewegungen einschliessen, insbesondere derart, dass die Position jedes geladenen Gegenstandes relativ zum Haltemittel genau definiert ist. Das erfindungsgemässe Verfahren und die erfindungsgemässe Vorrichtung sollen insbesondere für die Förderung von Gegenständen mit verschiedenen Formaten geeignet sein, derart, dass ein Umstellen von einem Gegenstandsformat auf ein anderes Gegenstandsformat möglichst ohne Umstellung von Verfahren und Vorrichtung möglich ist. Trotzdem sollen Verfahren und Vorrichtung einfach und für möglichst viele verschiedene Halte/Fördermittel und Anwendungen verwendbar sein und soll die erfindungsgemässe Vorrichtung mit möglichst wenig beweglichen Teilen realisierbar sein.

Diese Aufgabe wird gelöst durch das Verfahren und die Vorrichtung, wie sie in den entsprechenden, unabhängigen Ansprüchen definiert sind.

Nach dem erfindungsgemässen Verfahren werden Halte/Fördermittel durch einen Ladeund/oder Entladebereich gefördert. Parallel zu den Halte/Fördermitteln und synchron mit diesen werden auch Gegenstandsführungen durch den Lade/Entladebereich gefördert, das heisst also mit gleichen Abständen und mit gleicher Geschwindigkeit wie die Halte/Fördermittel und derart, dass je eine Gegenstandsführung und ein Halte/Fördermittel relativ zueinander stationär und aufeinander ausgerichtet sind. Während der Förderung durch den Lade/Entladebereich bleiben die Gegenstandsführungen je einem Haltemittel zugeordnet und werden Gegenstände bzw. Gegenstandsgruppen zum Beladen von Haltemitteln aus Gegenstandsführungen in Haltemittel geschoben oder zum Entladen von Haltemitteln aus Haltemitteln in Gegenstandsführungen geschoben, wobei die Verschiebungen im wesentlichen quer zur Förderrichtung durchgeführt werden. Für die Verschiebung der Gegenstände sind beispielsweise den Gegenstandsführungen zugeordnete Gegenstandsschieber vorgesehen, die eine zur Förderung durch den Lade/Entladebereich im wesentlichen senkrechte Verschiebebewegung ausführen. Damit die Verschiebung der Gegenstände von den Haltemitteln in die Führungen und umgekehrt stabil und mit im wesentlichen unveränderter räumlicher Lage der Gegenstände geführt ist, ist es wichtig, dass nicht nur die Gegenstandsführungen als in Schieberichtung sich im wesentlichen nicht verändernde Führungen ausgestaltet sind sondern auch die Haltemittel, dass diese also mindestens im Bereiche des Schiebeweges einen gleich bleibenden Führungsquerschnitt quer zur Schieberichtung aufweisen.

Vorteilhafterweise werden die Halte/Fördermittel unabhängig davon, wie sie in anderen Bereichen des Fördersystems gefördert werden, durch den Lade/Entladebereich in regelmässigen Abständen voneinander gefördert und ist die Förderung der Halte/Fördermittel in diesem Bereich mit der Förderung der Gegenstandsführungen und -schieber mechanisch gekoppelt und vom gleichen Antrieb angetrieben. Es ist aber auch denkbar, dass die Halte/Fördermittel in unregelmässigen Abständen voneinander durch den Lade/Entladebereich gefördert werden und dass am Eingang dieses Bereiches je eine Gegenstandsführung und ein Gegenstandsschieber mit jedem Halte/Fördermittel gekoppelt werden und dass diese Kopplung bis ans Ende des Bereiches beibehalten wird.

In einem Ladebereich werden beispielsweise die folgenden Verfahrensschritte durchgeführt:
- dem Ladebereich werden geöffnete Haltemittel, Gegenstandsschieber und Gegenstandsführungen zugeführt, wobei jede Gegenstandsführung einen Gegenstand mitführt;
- während der synchronen Förderung von einander zugeordneten Gegenstandsführungen, Gegenstandsschiebern und Haltemitteln durch den Ladebereich werden Gegenstände durch Bewegung der Gegenstandsschieber im wesentlichen senkrecht zur Förderrichtung aus den Gegenstandsführungen in geöffnete Haltemittel geschoben;
- am Ausgang des Ladebereiches werden die Haltemittel geschlossen;
- vom Ladebereich werden Gegenstandsführungen, Gegenstandsschieber und Haltemittel weggefördert, wobei jedes Haltemittel einen Gegenstand hält.

In einem Entladebereich werden beispielsweise die folgenden Verfahrensschritte durchgeführt:
- dem Entladebereich werden Gegenstandsführungen, Gegenstandsschieber und Haltemittel zugefördert, wobei jedes Haltemittel einen Gegenstand hält;
- am Eingang des Entladebereiches werden die Haltemittel geöffnet;
- während der synchronen Förderung von einander zugeordneten Gegenstandsführungen, Gegenstandsschiebern und Haltemitteln durch den Entladebereich werden Gegenstände durch Bewegung der Gegenstandsschieber im wesentlichen senkrecht zur Förderrichtung aus den geöffneten Haltemitteln in Gegenstandsführungen geschoben;
- vom Entladebereich werden geöffnete Haltemittel, Gegenstandsschieber und Gegenstandsfiihrungen weggefördert, wobei jede Gegenstandsführung einen Gegenstand mitführt.

Die Gegenstandsführungen und Gegenstandsschieber sind vorteilhafterweise derart ausgebildet, dass die Gegenstände durch die Schwerkraft in einer durch diese Mittel definierten Position gehalten werden. Dadurch kann auf weitere bewegliche Teile verzichtet werden.

Bei geeigneter Ausbildung von Haltemitteln, Gegenstandsführungen und Gegenstandsschiebern ist es auch möglich, mit dem erfindungsgemässen Verfahren je eine kleine Gruppe von Gegenständen auf ein Haltemittel zu laden oder von einem Haltemittel zu entladen.

Das erfindungsgemässe Verfahren und die erfindungsgemässe Vorrichtung werden anhand der folgenden Figuren im Detail beschrieben. Dabei zeigen:
- **Figuren 1 und 2**: zwei Seitenansichten einer beispielhaften Ausführungsform der erfindungsgemässen Vorrichtung zum Beladen von Haltemitteln nach dem erfindungsgemässen Verfahren mit im wesentlichen horizontaler Verschiebung der Gegenstände;
- **Figur 3**: eine Draufsicht und eine Seitenansicht einer weiteren, beispielhaften Ausführungsform der erfindungsgemässen Vorrichtung zum Beladen von Haltemitteln nach dem erfindungsgemässen Verfahren mit im wesentlichen vertikaler Verschiebung der Gegenstände;
- **Figur 4**: eine Draufsicht und eine Seitenansicht einer weiteren, beispielhaften Ausführungsform der erfindungsgemässen Vorrichtung zum Entladen von Haltemitteln nach dem erfindungsgemässen Verfahren mit im wesentlichen vertikaler Verschiebung der Gegenstände.
- **Figuren 5 und 6**: eine beispielhafte Ausführungsform von Halte/Fördermitteln für die Anwendung in den Vorrichtungen gemäss Figuren 1 bis 4 für die gehaltene Förderung von im wesentlichen zylindrischen Gegenständen (Figur 5: Ansicht parallel zur Förderrichtung; Figur 6: Draufsicht quer zur Förderrichtung).

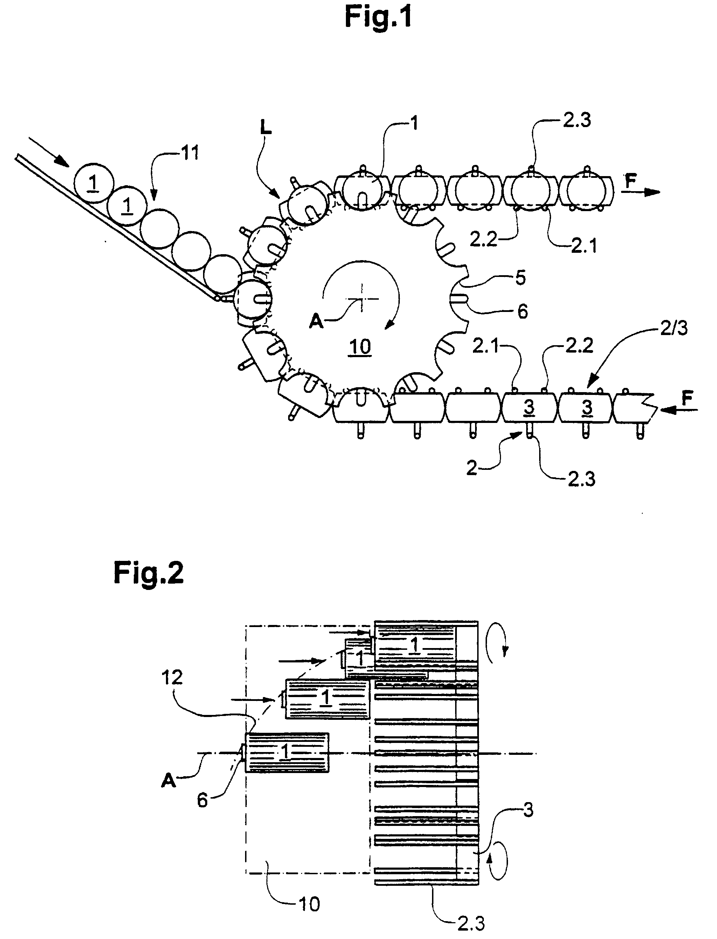

**Figuren 1 und 2** zeigen eine beispielhafte Ausführungsform einer Vorrichtung zum Beladen von Halte/Fördermitteln 2/3 mit Gegenständen 1. Die Vorrichtung ist in zwei Seitenansichten dargestellt, in Figur 1 mit Blickwinkel im wesentlichen quer zu einer Ebene, in der Halte/Fördermittel 2/3 (auf Fördermitteln 3 montierte Haltemittel 2) in einer Förderrichtung F entlang eines Kreisbogens um 180° gegen oben umgelenkt werden, und in Figur 2 mit Blickwinkel im wesentlichen parallel zu dieser Ebene.

Die Gegenstände 1 haben beispielsweise eine zylindrische Form und die Haltemittel 2 bestehen im wesentlichen aus drei zur Zylinderachse der Gegenstände 1 parallel ausgerichteten Haltestäben 2.1 bis 2.3, wobei zwei Haltestäbe 2.1 und 2.2 relativ zum Fördermittel 3 stationär sind und ein Haltestab 2.3 relativ zum Fördermittel 3 verschiebbar ist. Der verschiebbare Haltestab 2.3 hat eine äussere Stellung (geöffnetes Haltemittel) und eine innere Stellung, in der er einen Gegenstand gegen die stationären Haltestäbe presst (geschlossenes Haltemittel). Die Haltestäbe 2.1, 2.2 und 2.3, insbesondere die stationären Haltestäbe 2.1 und 2.2 haben für den Ladevorgang auch eine Führungsfunktion.

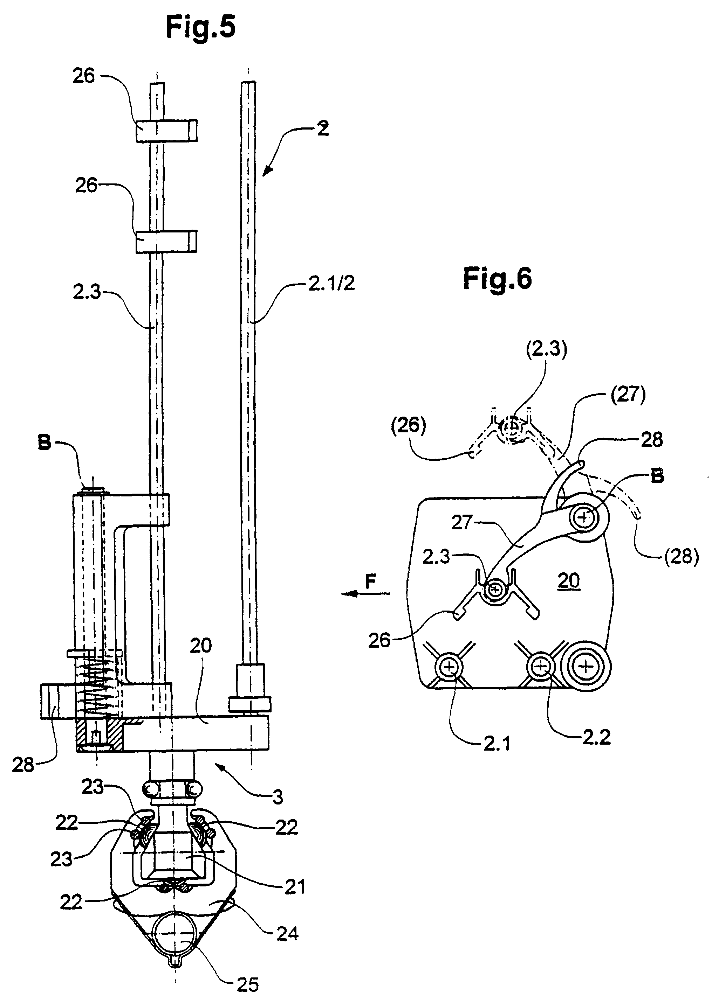

Die Haltemittel 2 sind bei der Zuführung in den Ladebereich L offen und werden am Ausgang des Ladebereichs mit geeigneten Mitteln geschlossen (siehe Figuren 5 und 6).

Die Fördermittel 3 können Glieder einer Förderkette sein oder auch einzeine auf Schienen verfahrbare Fördermittel, die über flexible Verbindungen miteinander verbunden oder voneinander völlig unabhängig sind. Durch den Ladebereich L werden die Fördermittel 3 in regelmässigen Abständen gefördert. Voneinander mehr oder weniger unabhängige Fördermittel 3 werden gestossen gefördert, derart, dass sich Minimalabstände einstellen, mit äquidistanten Fördernocken angetrieben oder mit gleichmässigen Abständen an eine Förderkette oder einen Förderriemen angekoppelt.

Durch den Ladebereich L werden auch Paare von Gegenstandsführungen 5 und Gegenstandsschiebern 6 gefördert und zwar parallel zur Förderung der Halte/Fördermittel 2/3 und synchron mit diesen, derart, dass immer ein Paar von Gegenstandsführung 5 und Gegenstandsschieber 6 auf ein Haltemittel 2 ausgerichtet ist.

Die Halte/Fördermittel 2/3 werden mindestens für die Umlenkung von einem gezähnten Rad (nicht dargestellt) angetrieben und, wenn sie nicht zu einer stabilen Kette miteinander verbunden sind, in einem entsprechenden Kanal (nicht dargestellt) geführt.

Die Gegenstandsführungen 5 sind als kanalartige Ausnehmungen eines Führungsrades 10 ausgeführt, wobei das Führungsrad 10 mit dem oben genannten Antriebsrad für die Halte/Führungsmittel 2/3 koaxial angeordnet und vorteilhafterweise mit diesem starr verbunden ist, derart, dass das Führungsrad 10 und das Antriebsrad zusammen eine trommelartige Anordnung mit einer im wesentlichen waagrechten Drehachse A bilden.

Diese trommelartige Anordnung wird im Uhrzeigersinn angetrieben und damit die Schwerkraft für eine Positionierung der Gegenstände in den Gegenstandsführungen 5 ausgenützt werden kann, ist der Ladebereich L zwischen der 9-Uhr-Stellung und der 12-Uhr-Stellung vorgesehen. Entsprechend werden die Gegenstände 1 beispielsweise aus einem Puffer 11, in dem sie durch die Schwerkraft nachrollen in der 9-Uhr-Stellung in den Führungsmitteln positioniert. Dann werden Sie während der Weiterförderung durch Gegenstandsschieber 6 parallel zur Rotationsachse A in die Haltemitteln 2 geschoben, derart, dass sie in der 12-Uhr-Stellung in den Haltemitteln 2 positioniert sind und diese geschlossen werden können.

Für die Verschiebung der Gegenstandsschieber 6 quer zur Förderrichtung ist beispielsweise eine stationäre Bewegungskulisse vorgesehen, wie dies mit einer strichpunktierten Linie 12 angedeutet ist. Für Anwendungsfälle mit wenig empfindlichen Gegenständen ist es auch denkbar, anstelle von mit den Gegenstandsführungen mitgeförderten, einzelnen Gegenstandsschiebern 6 die stationäre Kulisse als Verschiebungsmittel zu verwenden und derart anzuordnen, dass sie direkt verschiebend auf die Gegenstände 1 wird.

Die in den Figuren 1 und 2 dargestellte Vorrichtung ist eine Ladevorrichtung. Entsprechend angepasst und in entgegengesetzter Richtung betrieben kann sie aber auch als Entladevorrichtung verwendet werden. Dafür ist anstelle des Puffers 11 beispielsweise eine abwärts gerichtete Rollbahn zur Wegführung der entladenen Gegenstände vorzusehen und sind die Gegenstandsschieber 6 für einen Angriff an der gegen die Haltemittel 2 gerichteten Gegenstandsseite anzuordnen und derart auszugestalten, dass sie zwischen den stationären Haltestäben 2.1 und 2.2 eingreifen können.

In einer Vorrichtung gemäss Figuren 1 und 2,werden zylindrische Gegenstände mit verschiedenen axialen Längen ohne Neueinstellung der Vorrichtung, insbesondere mit gleichbleibendem Hub der Gegenstandsschieber 6 in eine Position geschoben, in der ihre nachlaufende Seite unabhängig von ihrer axialen Länge eine immer gleiche Position (Referenzposition) relativ zum distalen Ende des Haltemittels 2 einnimmt. Dies ist sehr günstig für eine allfällige Bearbeitung der gehalten geförderten Gegenstände 1 und erlaubt in einer auf dem gleichen Prinzip basierenden Entladevorrichtung, wiederum mit einem gleichbleibenden Hub der Gegenstandsschieber 6 eine von der Gegenstandslänge unabhängige Entladung der Gegenstände.

Das heisst mit anderen Worten, dass in einem Stückgut-Fördersystem mit im wesentlichen gemäss Figuren 1 und 2 ausgestaltetem Lade- und Entladebereich ohne irgend eine Umstellung zylindrische Gegenstände verschiedener axialer Länge handhabbar sind, wobei die Gegenstände zwischen Ladebereich und Entladebereich einer Bearbeitung zuführbar sind, in der ihre eine Seite gegenüber dem distalen Ende der Haltemittel eine vorgegebene Position einzunehmen hat.

Die axiale Länge der Gegenstände 1 ist gegen unten begrenzt durch den Abstand zwischen Gegenstandsführungen 5 und Haltemitteln 2 und gegen oben ebenfalls durch diesen Abstand in Kombination mit den Abmessungen der Haltemittel 2 in Richtung der Gegenstandsverschiebung (Länge der Haltestäbe 2.1, 2.2 und 2.3).

Vorteilhafterweise sind auch die Führungsmittel 5 und die Haltemittel 2 derart ausgestaltet, dass sie ohne Umstellung oder mit einfacher Umstellung zylindrische Gegenstände mit in vorgegebenen Grenzen variablen Durchmessern handhaben können (siehe auch Figuren 5 und 6).

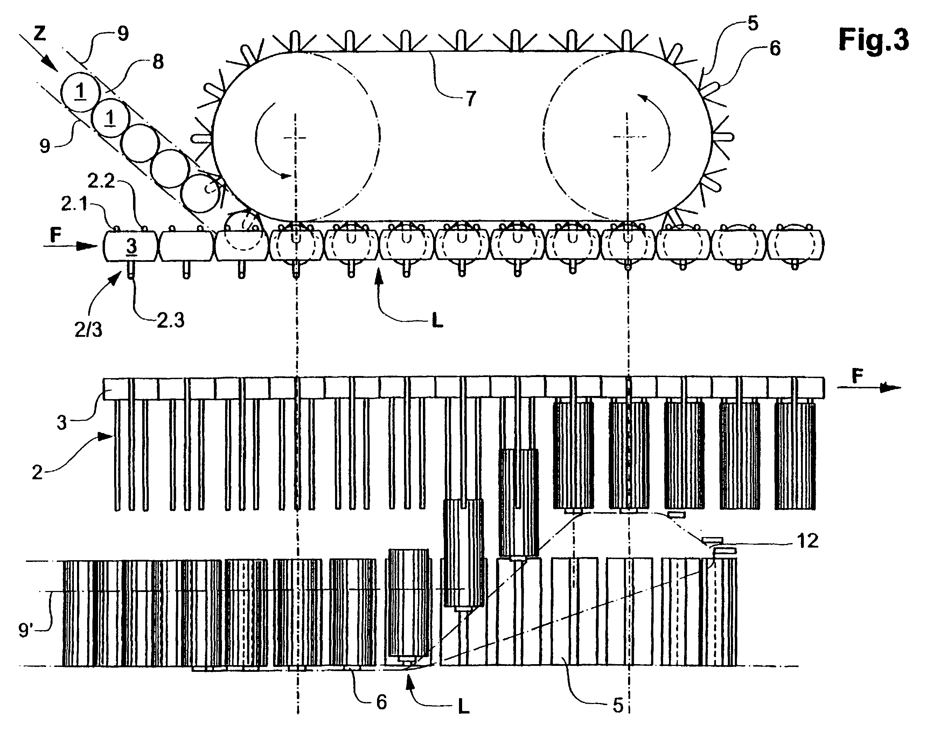

**Figur 3** zeigt als Draufsicht (oben) und als Seitenansicht (unten) eine weitere, beispielhafte Ausführungsform der erfindungsgemässen Vorrichtung zum Laden von Halte/Fördermitteln 2/3 mit Gegenständen 1, wobei die Gegenstände 1 mittels Gegenstandsschiebern 6 im wesentlichen vertikal gegen oben aus Gegenstandsführungen 5 in die Haltemittel 2 geschoben werden. Auch diese Vorrichtung kann durch geringe Anpassungen und in gegenläufigem Betrieb als Entladevorrichtung verwendet werden.

Gegenstände 1, Haltemittel 2 und Fördermittel 3 sind im wesentlichen dieselben, wie bereits im Zusammenhang mit den Figuren 1 und 2 beschrieben.

Die Paare von Gegenstandsführungen 5 und Gegenstandsschiebern 6 sind an einer endlosen Kette 7 montiert, wobei die Kette 7 beispielsweise über zwei Kettenräder geführt und angetrieben wird. Den Paaren von Gegenstandsführungen 5 und Gegenstandsschiebern 6 werden die Gegenstände 1 beispielsweise auf einem Förderband 8 mit seitlichen Führungen 9 (angedeutet durch strichpunktierte Linien) zugeführt (Zuführungsrichtung Z).

Wie aus der Seitenansicht (Figur 3, unten) zu ersehen ist, tragen die Gegenstandsschieber 6 die Gegenstände 1 und schieben diese geführt durch die Gegenstandsführungen gegen oben in die geöffneten Haltemittel 2. Gegebenenfalls ist eine seitliche Führung aus dem Zuführungsbereich entsprechen weiterzuführen, wie dies durch die strichpunktierte Linie 9' angedeutet ist. Wenn die Gegenstandsschieber 6 seine höchste Position erreicht hat, wird das entsprechende Haltemittel 2 geschlossen.

Für die Verschiebung der Gegenstandsschieber 6 quer zur Förderrichtung ist beispielsweise eine stationäre Bewegungskulisse vorgesehen, wie dies mit einer strichpunktierten Linie 12 angedeutet ist. Für Anwendungsfälle mit wenig empfindlichen Gegenständen ist es auch denkbar, anstelle von mit den Gegenstandsführungen mitgeförderten, einzelnen Gegenstandsschiebern 6 die stationäre Kulisse als Verschiebungsmittel zu verwenden und derart anzuordnen, dass sie direkt verschiebend auf die Gegenstände 1 wirkt.

Genau wie für die Ausführungsform gemäss Figuren 1 und 2 beschrieben, gilt auch für die Ausführungsform gemäss Figur 3, dass für die Handhabung von Gegenständen verschiedener axialer Längen ohne Umstellung der Vorrichtung, insbesondere mit gleichem Hub der Gegenstandsschieber 6, die Gegenstände 1 mit einer gleichbleibenden Stellung des distalen Endes der Gegenstände in den Haltemitteln positioniert werden. Dies ist insbesondere ein Vorteil, wenn die beladenen Haltemittel zu einer Bearbeitung der Gegenstände gefördert werden, wo die Gegenstände während der Förderung und von den Haltemitteln in einer vorgegebenen Bearbeitungsposition gehalten bearbeitet werden.

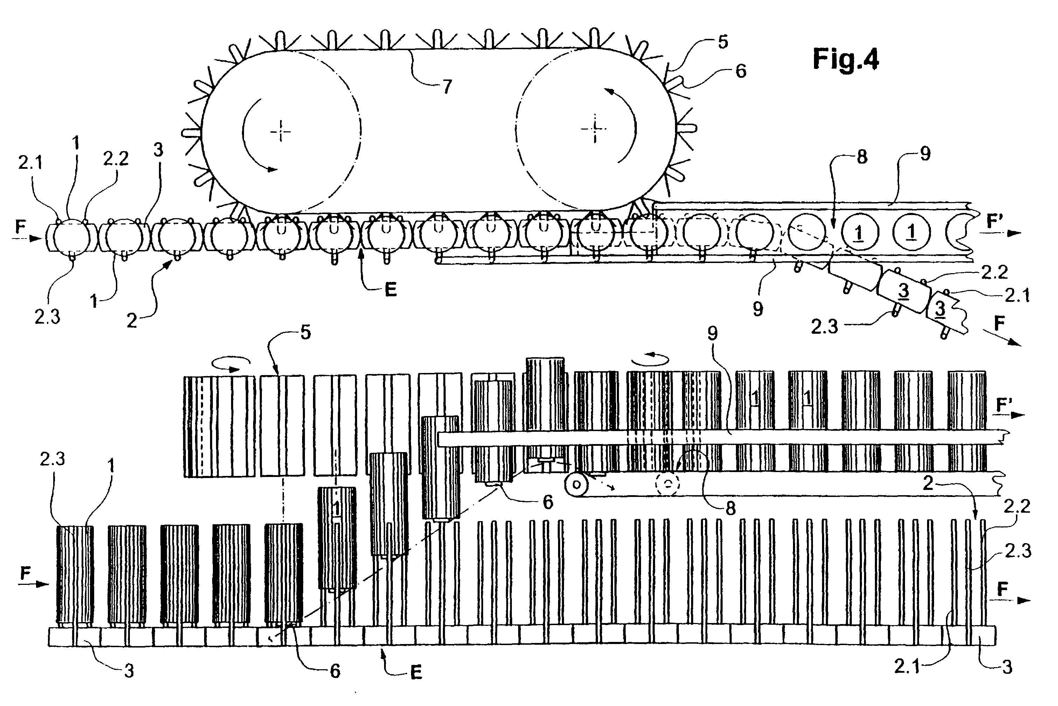

**Figur 4** zeigt, wiederum als Draufsicht (oben) und als Seitenansicht (unten) eine weitere, beispielhafte Ausführungsform der erfindungsgemässen Vorrichtung zum Entladen von Gegenständen 1 von Haltemitteln 2 in einem Entladebereich E. Die Vorrichtung ist oben als Draufsicht, unten als Seitenansicht dargestellt. Gegenstände 1, Haltemittel 2 und Fördermittel 3 sind im wesentlichen dieselben, wie bereits im Zusammenhang mit den Figuren 1 bis 3 beschrieben.

Die Vorrichtung gemäss Figur 4 entspricht im wesentlichen der Ausführungsform gemäss Figur 3 (gleiche Teile sind mit gleichen Bezugsziffern bezeichnet), wobei aber die Halte/Fördermittel 2/3 unter den Gegenstandsführungen 6 angeordnet sind und die Gegenstände für die Entladung gegen oben verschoben werden.

Wie aus der Seitenansicht (Figur 4, unten) zu ersehen ist, greifen die Gegenstandsschieber 6 unter den Gegenständen 1 in die Haltemittel 2. Dann werden die Haltemittel 2 geöffnet und die Gegenstandsschieber 6 schieben die Gegenstände 1 während ihrer kontinuierlichen Förderung durch den Entladebereich E aus den Haltemitteln 2 gegen oben und in die Gegenstandsführungen 5. Von Gegenstandsführungen 5 und Gegenstandsschiebern 6 geführt und durch die Schwerkraft in der geführten Position gehalten, werden die Gegenstände 1 gegen ein Wegführmittel, beispielsweise ein Förderband 8 mit seitlichen Führungen 9, gebracht und vom Ende des Entladebereichs E von diesem in Wegführrichtung F' weggeführt.

Auch die Vorrichtung gemäss Figur 4 kann entsprechend angepasst zum Beladen von Halte/Fördermitteln 2/3 mit Gegenständen 1 verwendet werden. Die Pfeilrichtungen (F, F) in der Figur sind umzukehren und anstelle des Förderbandes 8 ist ein Eintaktmittel vorzusehen, mit dem die Gegenstände 1 in Gegenstandsführungen 5 und auf Gegenstandsschieber 6 positionierbar sind.

Zur Erstellung einer Referenzposition des distalen Endes von Gegenständen mit verschiedenen axialen Längen, wie dies bereits im Zusammenhang mit den Figuren 1 bis 3 beschrieben wurde, muss in einer Ladevorrichtung basierend auf dem Prinzip von Figur 4 das Schliessen der Haltemittel genau mit dem Absenken der Gegenstandsschieber synchronisiert und auf die axiale Länge der Gegenstände abgestimmt werden.

Soll bei Lade- oder Entladeverfahren mit Vorrichtungen, wie sie durch die Figuren 1 bis 4 illustriert sind, nicht jedes Haltemittel 2 sondern nur spezifische Haltemittel beladen bzw. entladen werden,, sind die Gegenstandsschieber 6 auch senkrecht zur Verschiebungsrichtung verschiebbar auszugestalten, derart, dass das distale Ende eines Schiebers 6 eine vorgeschobenen Ladeposition (wie in den Figuren dargestellt) oder eine zurückgezogene Nicht-Lade-Position einnehmen kann, wobei ein Gegenstandsschieber 6 in der Nicht-Lade-Position nicht mit dem ihm zugeordneten Gegenstand in Interaktion kommt.

**Figuren 5 und 6** zeigen eine beispielhafte Ausführungsform eines Halte/Fördermittels 2/3 zur Anwendung in einer der Vorrichtungen gemäss Figuren 1 bis 4 oder in einer ähnlichen Vorrichtung zur Durchführung des erfindungsgemässen Verfahrens mit im wesentlichen zylindrischen Gegenständen. Das Förder/Haltemittel 2/3 ist in der Figur 5 dargestellt mit Blickwinkel parallel zur Förderrichtung F und in der Figur 6 als Draufsicht im wesentlichen quer zur Förderrichtung F.

Das Fördermittel 3 weist eine Tragplatte 20 auf, an der ein Rollkörper 21 montiert ist. Der Rollkörper 21 weist mindestens eine Dreiergruppe von Kugeln 22 auf, die in einem Kugelkäfig gefangen sind und auf je zwei Schienen 23 und auf den anderen Kugeln der Gruppe abrollen. Die Schienen 23 werden beispielsweise von voneinander beabstandeten Trägern 24 in einer vorgegebenen Position relativ zueinander gehalten, wobei die Träger 24 auf einem sich entlang der Förderstrecke erstreckenden Tragelement 25 montiert sind. Die Schienen 23 bilden einen Schienenkäfig, in dem die Rollkörper 21 gefangen sind und aus dem die Tragplatte 20 ragt

Die Tragplatte 20 tragt auf der vom Rollkörper 21 abgewandten Seite das Haltemittel 2 in Form von drei Haltestäben 2.1 bis 2.3, wobei die Haltestäbe 2.1 und 2.2 starr auf der Tragplatte 20 montiert sind und der Haltestab 2.3 quer zu seiner Länge um eine Schwenkachse B in eine innere Position (geschlossenes Haltemittel, mit ausgezogenen Linien dargestellt) und in eine äussere Position (geöffnetes Haltemittel, mit strichpunktierten Linien dargestellt und mit in Klammern gesetzten Bezugsziffern bezeichnet) schwenkbar ist. Der verschwenkbare Haltestab 2.3 trägt um den Haltestab schwenkbare Halteflügel 26. Er wird durch nicht dargestellte Rückstellmittel, beispielsweise durch eine entsprechend angeordnete Feder, in die innere Position getrieben bzw. die Halteflügel 26 werden durch eine geeignete Steuerung bei der Verschwenkung des verschwenkbaren Haltestabes 2.3 derart verschwenkt, dass sich ihre Lage relativ zu den stationären Haltestäben 2.1 und 2.2 nicht verändert und sie werden in dieser Schwenkposition durch die Wirkung des Rückstellmittels gegen einen zwischen den Haltestäben positionierten, im wesentlichen zylindrischen Gegenstand gepresst. Dabei ist der Durchmesser des Gegenstandes offensichtlich in durch die Positionen der stationären Haltestäbe 2.1 und 2.2 und durch die Schwenkbarkeit des schwenkbaren Haltestabes 2.3 gegebenen Grenzen varüerbar.

An einem Schwenkteil 27, an dem der verschwenkbare Haltestab 2.3 befestigt ist, ist ein Steuerhebel 28 angeordnet. In Förderstreckenbereichen, in denen der verschwenkbare Haltestab 2.3 in seiner äusseren Stellung positioniert sein muss (Lade/Entladebereich), sind Steuerkulissen vorzusehen, durch die der Steuerhebel 28 gegen die rücktreibende Kraft des Rückstellmittels in seine mit (28) bezeichnete Position bringbar und in dieser Position haltbar ist.

Die Tragplatte 20 kann für voneinander unabhängige oder mit flexiblen Verbindungsmitteln miteinander verbundene Halte(Fördermittel 2/3 neben ihrer tragenden Funktion auch eine Abstandsfunktion übernehmen. Sie weist dafür an ihrer vor- und rücklaufenden Seite eine abgerundete Form auf und überragt mindestens in diesen Bereichen die anderen Teile des Halte/Fördermittels. Wenn die Halte/Fördermittel 2/3 stossend gefördert werden, stellt sich ein durch die aneinanderstossenden Tragplatten 20 definierter Minimalabstand zwischen den Haltemitteln 2 ein.

Für die Handhabung von Gegenständen, die nicht zylinderförmig sind, sondern beispielsweise flach, sind die Haltemittel 2 entsprechend anzupassen, beispielsweise als zweiteilige Greifer auszugestalten.

## Patentansprüche

1. Verfahren zur Stückgut-Förderung in einer Förderrichtung (F), wobei Gegenstände (1) einzeln oder in kleinen Gruppen nacheinander auf Haltemittel (2) geladen, von Haltemitteln (2) gehalten gefördert und von Haltemitteln (2) entladen werden und wobei die Gegenstände für das Laden und/oder für das Entladen in einer Verschieberichtung im wesentlichen quer zur Förderrichtung (F) in Haltemittel (2) oder aus Haltemitteln (2) geschoben werden, **dadurch gekennzeichnet, dass** die Gegenstände (1) für das Laden aus parallel und synchron mit den Haltemitteln (2) geförderten, relativ zu den Haltemitteln stationären und in der Verschiebungsrichtung auf die Haltemittel (2) ausgerichteten Gegenstandsführungen (5) in geöffnete Haltemittel (2) geschoben und dann die Haltemittel (2) geschlossen werden und/oder dass für die Entladung die Haltemittel (2) geöffnet und dann die Gegenstände (1) aus den geöffneten Haltemitteln (2) in parallel und synchron mit den Haltemitteln (2) geförderte, relativ zu den Haltemitteln (2) stationäre und in der Verschieberichtung auf diese ausgerichtete Gegenstandsführungen (5) geschoben werden.

2. Verfahren nach Anspruch 1, **dadurch gekennzeichnet, dass** die Gegenstände (1) mittels Gegenstandsschiebem (6) geschoben werden, wobei je ein Gegenstandsschieber (6) einer Gegenstandsführung (5) zugeordnet ist.

3. Verfahren nach Anspruch 2, **dadurch gekennzeichnet, dass** die Gegenstände (1) vor dem Laden bzw. nach dem Entladen auf den Gegenstandsführungen (5) und/oder auf den Gegenstandsschiebern (6) lose aufliegen.

4. Verfahren nach einem der Ansprüche 2 oder 3, **dadurch gekennzeichnet, dass** die Haltemittel (2), die Gegenstandsrührungen (5) und die Gegenstandsschieber (6) für das Laden und/oder Entladen in regelmässigen Abständen hintereinander durch einen Ladebereich (L) bzw. durch einen Entladebereich (E) gefördert werden.

5. Verfahren nach einem der Ansprüche 1 bis 4, **dadurch gekennzeichnet, dass** die Gegenstände (1) im wesentlichen zylinderförmig sind und in Richtung ihrer Achse verschoben werden.

6. Verfahren nach einem der Ansprüche 1 bis 5, **dadurch gekennzeichnet, dass** nur ein Teil der Gegenstände auf Haltemittel geladen und/oder von Haltemitteln entladen wird.

7. Vorrichtung zur Stückgut-Förderung in einer Förderrichtung (F), wobei Gegenstände (1) einzeln oder in kleinen Gruppen nacheinander auf Haltemittel (2) geladen, von Haltemitteln (2) gehalten gefördert und von Haltemitteln (2) entladen werden und wobei die Gegenstände zum Laden und/oder Entladen in einer Verschieberichtung im wesentlichen quer zur Förderrichtung (F) verschoben werden, welche Vorrichtung zur gehaltenen Förderung von einzelnen Gegenständen (1) oder von kleinen Gruppen von Gegenständen (2) eine Mehrzahl von auf Fördermitteln (3) hintereinander verfahrbaren Haltemitteln (2) aufweist sowie in einem Ladebereich (L) und/oder Entladebereich (E) Mittel zur Verschiebung von Gegenständen in der Verschiebungsrichtung, **dadurch gekennzeichnet, dass** die Haltemittel (2) in einen geöffneten und einen geschlossenen Zustand bringbar sind, dass die Vorrichtung zusätzlich eine Mehrzahl von Gegenstandsführungen (5) aufweist, die parallel und synchron mit den Haltemitteln (2) in einer Förderrichtung (F) durch den Ladebereich (L) und/oder den Entladebereich (E) förderbar sind, wobei sie relativ zu den Haltemitteln (2) stationär und in der Verschieberichtung auf diese ausgerichtet sind, und dass die Haltemittel (2) als Führung für die Verschiebung der Gegenstände (1) in der Verschieberichtung ausgestaltet sind.

8. Vorrichtung nach Anspruch 7, **dadurch gekennzeichnet, dass** die Mittel zur Verschiebung von Gegenständen (1) in der Verschieberichtung eine Mehrzahl von im wesentlichen quer zur Förderrichtung (F) bewegbaren Gegenstandsschiebern (6) aufweist, die je einer Gegenstandsfuhrung (5) zugeordnet und mit dieser durch den Ladebereich (L) und/oder Entladebereich (E) förderbar sind.

9. Vorrichtung nach Anspruch 8, **dadurch gekennzeichnet, dass** die Gegenstandsschieber (6) durch eine stationäre Bewegungskulisse in der Verschieberichtung bewegbar sind.

10. Vorrichtung nach einem der Ansprüche 8 oder 9, **dadurch gekennzeichnet, dass** die Gegenstandsschieber (6) zusätzlich zur gesteuerten Ladung und/oder Entladung von spezifischen Haltemitteln (2) in einer Richtung quer zur Verschiebebewegung bewegbar sind.

11. Vorrichtung nach einem der Ansprüche 8 bis 10, **dadurch gekennzeichnet, dass** die Gegenstandsführungen (5) und die ihnen zugeordneten Gegenstandsschieber (6) in regelmässigen Abständen voneinander auf einer in sich geschlossenen Bahn bewegbar sind.

12. Vorrichtung nach Anspruch 11, **dadurch gekennzeichnet, dass** die Halte/Fördermittel (2/3) in regelmässigen Abständen voneinander und im wesentlichen geradlinig durch den Ladebereich (L) und/oder Entladebereich (E) förderbar sind und dass die Paare von Gegenstandsführungen (5) und Gegenstandsschiebern (6) an einer in sich geschlossenen durch Kettenräder geführten Kette (7) angeordnet sind, wobei ein geradliniges Stück der Kettenbahn parallel zur Förderung der Halt/Fördermittel (2/3) verläuft.

13. Vorrichtung nach Anspruch 11, **dadurch gekennzeichnet, dass** die Halte/Fördermittel (2/3) in regelmässigen Abständen voneinander auf einem Kreisbogen durch den Ladebereich (L) und/oder Entladebereich (E) förderbar sind und dass die Paare von Gegenstandsführungen (5) und Gegenstandsschiebern (6) auf einem koaxial zum Kreisbogen angeordneten Führungsrad (10) angeordnet sind.

14. Vorrichtung nach Anspruch 13, **dadurch gekennzeichnet, dass** eine Führung der Halte/Fördermittel (2/3) und das Führungsrad (10) mit den Gegenstandsführungen (5) und Gegenstandsschiebern (6) zusammen eine trommelartige Anordnung bilden.

15. Vorrichtung nach Anspruch 14, **dadurch gekennzeichnet, dass** die Rotationsachse (A) der trommelartigen Anordnung waagrecht ausgerichtet ist und dass der Ladebereich (L) oder Entladebereich (E) zwischen der 9-Uhr-Stellung und der 3-Uhr-Stellung angeordnet ist.

16. Vorrichtung nach einem der Ansprüche 7 bis 15, **dadurch gekennzeichnet, dass** die Haltemittel (2) drei im wesentlichen parallel angeordnete, quer zur Förderrichtung ausgerichtete Haltestäbe (2.1, 2.2, 2.3) aufweisen, wobei zwei Haltestäbe (2.1 und 2.2) stationär sind und der dritte Haltestab (2.3) relativ zu den stationären Haltestäben in eine äussere und eine innere Position verschiebbar oder verschwenkbar ist und durch ein Rückstellmittel in der inneren Position gehalten wird.

17. Vorrichtung nach einem der Ansprüche 7 bis 16, **dadurch gekennzeichnet, dass** die Halte/Fördermittel (2/3) voneinander unabhängig oder mit flexiblen Verbindungen miteinander verbunden sind und eine Halteplatte (20) aufweisen, welche Halteplatte (20) derart ausgebildet ist, dass sie bei gestossener Förderung der Halte/Fördermittel (2/3) den Abstand zwischen den Halte/Fördermitteln (2/3) bestimmt.

## Claims

1. Method for conveying piece goods in a conveying direction (F), wherein articles (1) are loaded one after the other individually or in small groups onto holding means (2), are conveyed being held by the holding means (2) and are unloaded from the holding means (2) and wherein for loading and/or unloading, the articles are pushed into holding means (2) or out of holding means (2) in a displacement direction essentially transverse to the conveying direction (F), **characterised in that** for loading, the articles (1) are pushed out of article guides (5) and pushed into open holding means (2) and the holding means (2) are then closed and/or that for the unloading, the holding means (2) are opened and then the articles (1) are pushed out of the open holding means (2) into article guides (5), wherein the article guides are conveyed parallel to and in synchronism with the holding means (2), are stationary relative to the holding means and, in displacement direction, are aligned with the holding means (2).

2. Method in accordance with claim 1, **characterised in that** the articles (1) are pushed by article pushers (6), wherein one article pusher (6) is assigned to each article guide (5).

3. Method according to claim 2, **characterised in that** prior to the loading or after the unloading, the articles (1) are lying loosely on the article guides (5) and/or on the article pushers (6).

4. Method in accordance with one of claims 2 or 3, **characterised in that** for the loading and/or unloading, the holding means (2), the article guides (5) and the article pushers (6) are conveyed at a regular spacing one after the other through a loading zone (L) or through an unloading zone (E).

5. Method according to one of claims 1 to 4, **characterised in that** the articles (1) are essentially cylinder-shaped and are displaced in the direction of their axis.

6. Method in accordance with one of claims 1 to 5, **characterised in that** only a part of the articles is loaded onto holding means and/or unloaded from holding means.

7. Device for conveying piece goods in a conveying direction (F), wherein articles (1) are loaded onto holding means (2), are conveyed held by holding means (2) and are unloaded from holding means (2) one after the other either individually or in small groups and wherein for the loading and/or the unloading, the articles are displaced in a displacement direction essentially perpendicular to the conveying direction (F), the device comprising for the held conveyance of individual articles (1) or of small groups of articles (2) a plurality of holding means (2) mounted on conveying means (3) and being displaceable one after the other, and the device in a loading zone (L) and/or unloading zone (E) further comprising means for displacing the articles in the displacing direction, **characterised in that** the holding means (2) are designed for being opened and closed, that the device further comprises a plurality of article guides (5) designed for being conveyed parallel to and in synchronism with the holding means (2) in a conveying direction (F) through the loading zone (L) and/or unloading zone (E), being stationary relative to the holding means (2) and being aligned to them in displacement direction, and that the holding means (2) are designed as guides for the displacement of the articles (1) in the displacement direction.

8. Device in accordance with claim 7, **characterised in that** the means for displacing the articles (1) in the displacement direction comprises a plurality of article pushers (6) movable essentially transverse to the conveying direction (F), each article pusher (6) being assigned to one article guide (5) and being able to be conveyed together with the article guide through the loading zone (L) and/or unloading zone (E).

9. Device according to claim 8, **characterised in that** the article pushers (6) are movable in the displacement direction by means of a stationary cam member.

10. Device in accordance with one of claims 8 or 9, **characterised in that** for the controlled loading and/or unloading of specific holding means (2), the article pushers (6) are further movable in a direction transverse to the displacement direction.

11. Device according to one of claims 8 to 10, **characterised in that** the article guides (5) and the article pushers (6) assigned to them are movable on a closed in itself track with a regular spacing between one another.

12. Device in accordance with claim 11, **characterised in that** the holding/conveying means (2/3) are designed to be conveyed through the loading zone (L) and/or unloading zone (E) with a regular spacing between one another and in an essentially straight line and that the pairs of article guides (5) and article pushers (6) are arranged on a closed in itself chain (7), which is guided by chain wheels, wherein a straight section of the chain track runs parallel to the conveyance of the holding/conveying means (2/3).

13. Device according to claim 11, **characterised in that** the holding/conveying means (2/3) are designed to be conveyed through the loading zone (L) and/or unloading zone (E) with a regular spacing between one another along a circular arc and that the pairs of article guides (5) and article pushers (6) are arranged on a guide wheel, which itself is arranged co-axially to the circular arc.

14. Device in accordance with claim 13, **characterised in that** a guide for guiding the holding/conveying means (2/3) and the guide wheel (10) together with the article guides (5) and article pushers (6) form a drum-like arrangement.

15. Device according to claim 14, **characterised in that** the axis of rotation (A) of the drum-like arrangement is horizontally aligned and that the loading zone (L) or unloading zone (E) is arranged between a 9 o'clock position and a 3 o'clock position.

16. Device in accordance with one of claims 7 to 15, **characterised in that** the holding means (2) comprise three holding rods (2.1, 2.2, 2.3) being arranged essentially in parallel and being aligned transverse to the conveying direction, wherein two holding rods (2.1 and 2.2) are stationary and the third holding rod (2.3) is displaceable or swivellable into an outer and an inner position relative to the stationary holding rods and is held in the inner position by a resetting means.

17. Device according to one of claims 7 to 16, **characterised in that** the holding/conveying means (2/3) are independent of one another or are connected together with flexible connections and comprise a support plate (20), which support plate (20) is designed in such a manner, that when the holding/conveying means are being conveyed in pushed manner the support plates define the spacing between the holding/conveying means (2/3).

## Revendications

1. Procédé de transport de produits pièce par pièce dans une direction de transport (F), dans lequel des objets (1) sont chargés individuellement ou en petits groupes successifs sur des moyens de retenue (2), sont transportés en étant retenus par les moyens de retenue (2) et sont déchargés par les moyens de retenue (2), les objets étant déplacés dans une direction de déplacement essentiellement transversale par rapport à al direction de transport (F) pour le chargement dans les moyens de retenue (2) ou le déchargement hors des moyens de retenue (2), **caractérisé en ce que** pour le chargement, les objets (1) sont déplacés dans les moyens de retenue (2) ouverts en étant repris dans des guides (5) d'objet transportés parallèlement et en synchronisme avec les moyens de retenue (2), stationnaires par rapport aux moyens de retenue et alignés sur les moyens de retenue (2) dans la direction du déplacement, les moyens de retenue (2) étant ensuite fermés et/ou **en ce que** pour le déchargement, les moyens de retenue sont ouverts et les objets (1) sont ensuite déplacés dans des guides (5) d'objets transportés parallèlement et en synchronisme avec les moyens de retenue (2), stationnaires par rapport aux moyens de retenue (2) et alignés sur eux dans la direction de déplacement.

2. Procédé selon la revendication 1, **caractérisé en ce que** les objets (1) sont déplacés au moyen de poussoirs (6) d'objet, un poussoir (6) d'objet étant associé à chaque guide (5) d'objet.

3. Procédé selon la revendication 2, **caractérisé en ce qu'**avant le chargement et après le déchargement, les objets (1) reposent lâchement sur les guides (5) d'objet et/ou sur les poussoirs (6) d'objet.

4. Procédé selon l'une des revendications 2 ou 3, **caractérisé en ce que** pour le chargement et/ou le déchargement, les moyens de retenue (2), les guides (5) d'objet et les poussoirs (6) d'objet sont transportés les uns derrière les autres à intervalles réguliers à travers une zone de chargement (L) ou à travers une zone de déchargement (E).

5. Procédé selon l'une des revendications 1 à 4, **caractérisé en ce que** les objets (1) sont de forme essentiellement cylindrique et sont déplacés dans la direction de leur axe.

6. Procédé selon l'une des revendications 1 à 5, **caractérisé en ce que** seule une partie des objets est chargée sur les moyens de retenue et/ou déchargée des moyens de retenue.

7. Dispositif de transport de produits pièce par pièce dans une direction de transport (F), dans lequel des objets (1) sont chargés individuellement ou en petits groupes successifs sur des moyens de retenue (2), sont transportés en étant retenus par les moyens de retenue (2) et sont déchargés des moyens de retenue (2), les objets étant déplacés dans une direction de déplacement essentiellement transversale par rapport à la direction de transport (F) pour le chargement et/ou le déchargement, le dispositif de transport retenu d'objets (1) individuels ou de petits groupes d'objets (2) présentant plusieurs moyens de retenue (2) qui peuvent être transportés les uns derrière les autres sur des moyens de transport (3) ainsi que dans une zone de chargement (L) et/ou une zone de déchargement (E), ainsi que des moyens de déplacement des objets dans la direction de déplacement, **caractérisé en ce que** les moyens de retenue (2) peuvent être amenés dans un état ouvert et dans un état fermé, **en ce que** le dispositif présente de plus plusieurs guides (5) d'objet qui peuvent être transportés dans une direction de transport (F) qui traverse la zone de chargement (L) et/ou la zone de déchargement (E), parallèlement et en synchronisme avec les moyens de retenue (2), ces guides d'objet étant stationnaires par rapport aux moyens de retenue (2) et étant alignés sur ces derniers dans la direction de déplacement et **en ce que** les moyens de retenue (2) sont configurés comme guides pour le déplacement des objets (1) dans la direction de déplacement.

8. Dispositif selon la revendication 7, **caractérisé en ce que** les moyens de déplacement des objets (1) dans la direction de déplacement présentent plusieurs poussoirs (6) d'objet mobiles dans une direction essentiellement transversale à la direction de transport (F), associés à des guides (5) d'objet respectifs et aptes à être transportés avec ces derniers à travers la zone de chargement et/ou la zone de déchargement (E).

9. Dispositif selon la revendication 8, **caractérisé en ce que** les poussoirs (6) d'objet peuvent se déplacer dans la direction du déplacement grâce à une coulisse stationnaire de déplacement.

10. Dispositif selon l'une des revendications 8 ou 9, **caractérisé en ce que** de plus, pour le chargement et/ou le déchargement contrôlés de moyens de retenue (2) spécifiques, les poussoirs (6) d'objet peuvent être déplacés dans une direction transversale au déplacement.

11. Dispositif selon l'une des revendications 8 ou 10, **caractérisé en ce que** les guides (5) d'objet et les poussoirs (6) d'objet qui leur sont associés peuvent être déplacés à intervalles réguliers l'un par rapport à l'autre sur une piste en soi fermée.

12. Dispositif selon la revendication 11, **caractérisé en ce que** les moyens de retenue/transport (2/3) peuvent être transportés à intervalles réguliers les uns par rapport aux autres et essentiellement en ligne droite à travers la zone de chargement (L) et/ou la zone de déchargement (E) et **en ce que** les paires de guides (5) d'objet et de poussoirs (6) d'objet sont disposées sur une chaîne (7) en soi fermée guidée par des pignons de chaîne, une partie rectiligne du parcours de la chaîne s'étendant parallèlement au transport des moyens de retenue/transport (2/3).

13. Dispositif selon la revendication 11, **caractérisé en ce que** les moyens de retenue/transport (2/3) peuvent être transportés à intervalles réguliers les uns par rapport aux autres sur un arc de cercle qui traverse la zone de chargement (L) et/ou la zone de déchargement (E) et **en ce que** les paires de guides (5) d'objet et de poussoirs (6) d'objet sont disposées sur une roue de guidage (10) disposée coaxialement par rapport à l'arc de cercle.

14. Dispositif selon la revendication 13, **caractérisé en ce qu'**un guide des moyens de retenue/transport (2/3) et la roue de guidage (10) forment avec les guides (5) d'objet et les poussoirs (6) d'objet un agencement en forme de tambour.

15. Dispositif selon la revendication 14, **caractérisé en ce que** l'axe de rotation (A) de l'agencement en forme de tambour est orienté à l'horizontale et **en ce que** la zone de chargement (L) ou la zone de déchargement (E) sont disposées entre la position qui correspond à 9 heures et la position qui correspond à 3 heures.

16. Dispositif selon l'une des revendications 7 à 15, **caractérisé en ce que** les moyens de retenue (2) présentent trois barreaux de retenue (2.1, 2.2, 2.3) disposés essentiellement en parallèle et orientés transversalement par rapport à la direction de transport, deux barreaux de retenue (2.1 et 2.2) étant stationnaires et le troisième barreau de retenue (2.3) pouvant être déplacé ou incliné par rapport aux barreaux de retenue stationnaires dans une position extérieure et dans une position intérieure et est maintenu dans la position intérieure par un moyen de rappel.

17. Dispositif selon l'une des revendications 7 à 16, **caractérisé en ce que** les moyens de retenue/transport (2/3) sont indépendants les uns des autres ou sont reliés les uns aux autres par des liaisons flexibles et présentent une plaque de retenue (20), laquelle plaque de retenue (20) est configurée de manière à déterminer la distance entre les moyens de retenue/transport (2/3) lorsque le transport des moyens de retenue/transport (2/3) s'effectue avec chocs.
